# EUROPEAN PATENT SPECIFICATION

(11) **EP 2 065 455 B1**
(45) Date of publication and mention of the grant of the patent: **16.05.2012**
(21) Application number: 07023092.5
(22) Date of filing: 28.11.2007
(51) Int. Cl.: C09J 7/02, C09J 11/08, C09J 133/00

(54) **Pressure-sensitive adhesive tape**
Druckempfindliches Klebeband
Ruban adhésif sensible à la pression

(43) Date of publication of application: 03.06.2009
(60) Divisional application: 11004721.4
(73) Proprietor: NITTO DENKO CORPORATION, Osaka (JP)
(72) Inventor: Okochi, Naoki, Ibaraki-shi Osaka (JP); Ishiguro, Shigeki, Ibaraki-shi Osaka (JP); Shirai, Masato, Ibaraki-shi Osaka (JP)
(74) Representative: Grünecker, Kinkeldey, Stockmair & Schwanhäusser

(56) References cited:
- EP-A- 1 097 976
- EP-A- 1 460 116
- EP-A- 1 690 907
- WO-A-2005/111101
- BOWEN P.: 'Particle Size Distribution Measurement from Millimeters to Nanometers and from rods to Platelets' JOURNAL OF DISPERSION SCIENCE AND TECHNOLOGY vol. 23, no. 5, 2002, pages 631 - 662, XP009102859
- LANDFESTER K.: 'POLYREACTIONS IN MINIEMULSIONS' MACROMOLECULAR: RAPID COMMUNICATIONS, WILEY VCH VERLAG, WEINHEIM, DE vol. 22, no. 12, 30 August 2001, pages 896 - 936, XP001077169 ISSN: 1022-1336
- MARCUS CASAGRANDE: 'Untersuchung der Ordnung und Diffusion von Polymerdispersinen bei ihrer Verfilmung' INTERNET CITATION, [Online] 2000, pages 1 - 24 Dissertation Retrieved from the Internet: <URL:http://deposit.ddb.de/cgi-bin/dokserv? idn=961906103&dok_var=d1&dok_ext=pdf&filena me=961906103.pdf> [retrieved on 2011-09-30]
- INTERNET CITATION: 'Polymerdispersionen', [Online] 01 July 2011, pages 1 - 7 Wikipedia Retrieved from the Internet: <URL:http://de.wikipedia.org/wiki/Polymerdi spersion> [retrieved on 2011-09-30]

## Description

### FIELD OF THE INVENTION

The present invention relates to a pressure-sensitive adhesive tape, more precisely to a pressure-sensitive adhesive tape having excellent adhesiveness and excellent edge-peeling resistance and capable of exhibiting a suitable rewinding power even when the substrate is a polyolefin substrate.

### BACKGROUND OF THE INVENTION

Heretofore, as a pressure-sensitive adhesive tape to be used in bundling wires such as various electric wires and cables (bundling pressure-sensitive adhesive tape), widely used is a pressure-sensitive adhesive tape having a substrate of a polyvinyl chloride resin (hereinafter this may be referred to as "PVC") from the viewpoint of the handlability and the flame retardancy thereof. However, since the pressure-sensitive adhesive tape using PVC generates a toxic gas when incinerated, recently, a pressure-sensitive adhesive tape having a plastic substrate not containing a halogen atom such as chlorine (this may be referred to as "non-halogen adhesive tape"), especially a pressure-sensitive adhesive tape having a substrate of a polyolefin resin composition containing a polyolefin resin as the main ingredient thereof, has become used.

However, it is extremely difficult to make the polyolefin resin composition have well-balanced properties of strength, flexibility and stress relaxation suitable for use for bundling, like PVC. Accordingly, in order that such a polyolefin resin composition could be suitably used as the substrate of a pressure-sensitive adhesive tape for bundling applications, various investigations have been made, for example, about the balance of the strength and the flexibility of the resin composition (see JP-A-2001-192629 or JP-A-2001-311061). EP1 097 976 A2; EP 1 690 907 A2; and WO 2005/111101 disclose adhesive tapes.

On the other hand, a non-halogen adhesive tape has been proposed, which has good tackiness and adhesiveness (see JP-A-2001-131509 or JP-A-2001-164215).

An aqueous dispersion-type adhesive composition has also been proposed, which contains an acrylic polymer with a silane monomer used as the monomer component thereof (see JP-A-2001-131511 or JP-A-2003-176469).

However, the problem of stress relaxation has not yet been fully solved, and therefore, the pressure-sensitive adhesive tape having a substrate of a polyolefin resin composition still has a problem of reliability in that, after bundled with it, the edge of the pressure-sensitive adhesive tape may peel off, and has still other problems of handlability in that the rewinding power of the pressure-sensitive adhesive tape is too large and the adhesive is caught by its own back surface, or on the contrary, when the rewiring power of the pressure-sensitive adhesive tape is small, wires and the like could not be tightly bundled up with the tape.

The non-halogen pressure-sensitive adhesive tape having good tackiness and adhesiveness as mentioned above is still unsatisfactory in the point of its edge-peeling resistance of preventing the adhered tape from being peeled off from its edge after used for bundling and of its handlability (rewinding power).

Regarding the rewinding property of a pressure-sensitive adhesive tape that may have some influence on the handlability thereof, it has heretofore been proposed that the problem of rewinding property could be solved by adding a plasticizer to the adhesive.

Regarding the edge-peeling resistance, generally known is a method of increasing the tackiness and the adhesiveness of a pressure-sensitive adhesive tape by adding a plasticizer to the base polymer or transferring a plasticizer from the substrate to the base polymer, or by adding a tackifier to the base polymer. However, nothing has been disclosed or suggested about the effect of a concrete combination of such a plasticizer and a tackifier.

Given that situation, the present inventors have provided, for the purpose of solving the problem of the edge-peeling resistance and the problem of handlability in rewinding of a pressure-sensitive adhesive tape, an adhesive composition for a pressure-sensitive adhesive tape having a polyolefin substrate composed of a polyolefin resin composition, in which a rosin ester tackifier is added to the adhesive to thereby improve the edge-peeling resistance of the tape, and the rewinding power of the tape is suitably controlled by the effect of a plasticizer and a petroleum resin given to the tape.

However, a pressure-sensitive adhesive tape having more improved adhesiveness and edge-peeling resistance and also having a suitable rewinding power has been desired.

In particular, in an adhesive composition system containing a crosslinking agent, when the crosslinking agent is poorly dispersed in the system (not uniformly or almost not uniformly), or when the drying condition in forming the pressure-sensitive adhesive layer is fluctuated and (not constant or not almost constant), then there also occur some problems in that the rewinding power needed in rewinding the pressure-sensitive adhesive tape may increase or a tape being rewound may give a large noise.

Further, when a polyvalent metal salt such as a metal hydroxide serving as a flame retardant is contained in the plastic film serving as a substrate, there may occur a phenomenon that the adhesive strength of the pressure-sensitive adhesive tape may greatly lower with time. In addition, it has been known that, owing to this phenomenon, the edge of the adhered tape may readily peel off, thereby causing a problem of practicability of the tape. In that manner, when a polyvalent metal salt is contained in the substrate, then the polyvalent metal salt may crosslink with the reactive functional group (mainly carboxyl group) in the base polymer of the adhesive, whereby the adhesive may be cured and its adhesion strength may be lowered. Additionally, depending on the case, the emulsifier may deposit on the surface of the pressure-sensitive adhesive layer, whereby the adhesion strength of the tape may be further lowered.

### SUMMARY OF THE INVENTION

Accordingly, an object of the invention is to provide a pressure-sensitive adhesive tape having excellent adhesiveness and excellent edge-peeling resistance and capable of exhibiting a suitable rewinding power even when the substrate is a polyolefin substrate.

Another object of the invention is to provide a pressure-sensitive adhesive tape useful as a pressure-sensitive adhesive tape for bundling.

The present inventors have assiduously studied for the purpose of attaining the above objects,. Accordingly the present inventors provide the subject matter of claims 1 to 3.

### DETAILED DESCRIPTION OF THE INVENTION

Specifically, the present invention relates to the following (1) to (3).
(1) A pressure-sensitive adhesive tape comprising a substrate and at least one pressure-sensitive adhesive layer disposed on at least one surface of the substrate, wherein the substrate is formed of an olefinic resin composition containing a polyolefin resin and a metal hydroxide, and
   wherein the pressure-sensitive adhesive layer is formed of an emulsion-type acrylic adhesive composition containing an acrylic emulsion in which emulsion particles have a mean particle size of 0.2 µm or less,
   wherein the emulsion-type acrylic adhesive composition contains the following components (A), (B) and (C):
   (A) emulsion-type acrylic polymer,
   (B) petroleum resin, and
   (C) rosin resin,
   wherein the component (B) is contained in a proportion of from I to 50 parts by weight with respect to 100 parts by weight of the component (A), and the component (C) is contained in a proportion of from 1 to 50 parts by weight with respect to 100 parts by weight of the component (A), and wherein the emulsion-type acrylic polymer (A) is an emulsion-type acrylic polymer which is obtainable through an emulsion polymerization of monomer components in the presence of a reactive emulsifier having a group copolymerizable with the (meth)acrylate.
(2) The pressure-sensitive adhesive tape according to (1), wherein the emulsion-type acrylic polymer (A) is an acrylic polymer which is obtainable through a copolymerization of a monomer mixture containing a (meth)acrylate and an ethylenic unsaturated monomer having a hydrolyzing silicon atom-containing group.
(3) The pressure-sensitive adhesive tape according to (1), wherein a total proportion of the component (B) and the component (C) is from 10 to 60 parts by weight with respect to 100 parts by weight of the component (A).

In the present specification, (meth)acrylate means an acrylate and/or a methacrylate; and "(meth)" is used all for that meaning.

The pressure-sensitive adhesive tape of the invention has the constitution mentioned above, and therefore, even though the substrate is a polyolefin substrate, the pressure-sensitive adhesive tape of the invention may have excellent adhesiveness and excellent edge-peeling resistance and may express a suitable rewinding power. Accordingly, the pressure-sensitive adhesive tape of the invention is useful as a pressure-sensitive adhesive tape for bundling. In addition, in the pressure-sensitive adhesive tape, the substrate is a polyolefin substrate, and therefore the tape has another characteristic in that it does not generate a toxic gas when incinerated.

### Pressure-Sensitive Adhesive Layer

The pressure-sensitive adhesive tape of the invention has a pressure-sensitive adhesive layer formed of an emulsion-type acrylic adhesive composition containing an acrylic emulsion in which the emulsion particles have a mean particle size of 0.2 µm or less. To that effect, in the acrylic emulsion in the emulsion-type acrylic adhesive composition for forming the pressure-sensitive adhesive layer, since the emulsion particles have a mean particle size of 0.2 µm or less, the molecular weight (especially the weight-average molecular weight) of the polymer composition in the emulsion particles is large, and accordingly, the proportion of the low-molecular-weight component is small, whereby the emulsion can exhibit an excellent coagulation force. This is because, when the particle size of the emulsion particles is smaller, then the number of the particles in the emulsion becomes larger and the amount of the polymerization initiator to be taken in one emulsion particle becomes smaller and, and as a result, the molecular weight (especially the weight-average molecular weight) of the polymer component in the emulsion particles becomes larger. In addition, since the mean particle size of the emulsion particles is extremely small, the surface of the pressure-sensitive adhesive layer is not roughened but may be smooth, and therefore the pressure-sensitive adhesive layer may ensure an effective contact area (adhesion area). Accordingly, the pressure-sensitive adhesive tape of the invention may exhibit excellent adhesiveness and excellent edge-peeling resistance and may express a suitable rewinding power even though the substrate is an olefinic substrate.

In the emulsion-type acrylic adhesive composition, the mean particle size of the emulsion particles is not specifically limited so long as it may be 0.2 µm or less, and it is preferably from 0.01 to 0.18 µm (more preferably from 0.08 to 0.15 µm). The mean particle size of the emulsion particles in the emulsion-type acrylic adhesive composition is measured, using a laser scattering diffractiometric particle sizer "LS 13 320", manufactured by Beckman Coulter.

As mentioned above, the petroleum resin (B) and the rosin resin (C) are used in a suitable ratio to the emulsion-type acrylic polymer (A) that serves as the base polymer in the adhesive, and the pressure-sensitive adhesive tape exhibits more excellent adhesiveness and more excellent edge-peeling resistance and expresses a more suitable rewinding power. Concretely, when the adhesive contains the rosin resin (C) in such a suitable ratio, then the pressure-sensitive adhesive tape, when used (for example, for bundling with it), may exhibit greatly improved edge-peeling resistance of preventing the tape from peeling off from its edge. Herein, the edge-peeling resistance is an important characteristic in its practical use as a pressure-sensitive adhesive tape for bundling. When the adhesive contains the petroleum resin (B) in such a suitable ratio, then the rewinding capability of the pressure-sensitive adhesive tape, when it is rewound, may be greatly improved and the tape may exhibit a suitable rewinding powder, with lowering little or not lowering at all the edge-peeling resistance thereof.

### Emulsion-Type Acrylic Polymer (A)

For the acrylic polymer in the emulsion-type acrylic polymer (A) (this may be referred to as "acrylic polymer (A)"), usable is a (meth)acrylate polymer containing a (meth)acrylate (acrylate or methacrylate) as the main monomer component. The (meth)acrylate includes alkyl (meth)acrylates mentioned below, as well as cycloalkyl (meth)acrylates such as cyclohexyl (meth)acrylate, and aryl (meth)acrylates such as phenyl (meth)acrylate.

The acrylic polymer (A) is preferably an alkyl (meth)acrylate polymer containing an alkyl (meth)acrylate as the main monomer component. The alkyl (meth)acrylate polymer may be a polymer of an alkyl (meth)acrylate alone (homopolymer), or a copolymer of an alkyl (meth)acrylate with any other (meth)acrylate such as cycloalkyl (meth)acrylate or aryl (meth)acrylate or any other monomer copolymerizable with alkyl (meth)acrylate (copolymerizable monomer). In other words, in the alkyl (meth)acrylate polymer, the monomer component such as alkyl (meth)acrylate may be alone or may be a combination of two or more of such monomers.

Examples of the alkyl (meth)acrylate in the acrylic polymer (A) include C₁₋₂₀ alkyl (meth)acrylates (preferably C₂₋₁₄ alkyl (meth)acrylates, more preferably C₂₋₁₀ alkyl (meth)acrylates), such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. As the alkyl meth(acrylate), more preferred are butyl (meth)acrylate, and 2-ethylhexyl (meth)acrylate.

The (meth)acrylate is used herein as the main monomer component, and it is preferable that the proportion of the (meth)acrylate (especially alkyl (meth)acrylate) is 50% by weight or more, preferably 80% by weight or more, and more preferably 90% by weight or more, with respect to the total amount of the monomer component. When the proportion of the (meth)acrylate is smaller than 50% by weight, then the adhesiveness and the coagulability (or the adhesion strength and the coagulation power) of the adhesive composition may be lowered.

In the acrylic polymer (A), the comonomer copolymerizable with the alkyl (meth)acrylate includes, for example, carboxyl group-containing monomers such as (meth)acrylic acid (acrylic acid or methacrylic acid), itaconic acid, maleic acid, fumaric acid and crotonic acid; acid anhydride group-containing monomers such as maleic anhydride and itaconic anhydride; cyanoacrylate monomers such as acrylonitrile and methacrylonitrile; aminoalkyl (meth)acrylate monomers such as aminomethyl (meth)acrylate, N,N-dimethylaminoethyl (meth)acrylate and t-butylaminoethyl (meth)acrylate; (N-substituted) amide monomers such as (meth)acrylamide, N,N-dimethyl(meth)acrylamide, N-butyl(meth)acrylamide, N-hydroxy(meth)acrylamide, N-methylol(meth)acrylamide and N,N-dimethylaminopropyl(meth)acrylamide; vinyl ester monomers such as vinyl acetate and vinyl propionate; styrene monomers such as styrene, α-methylstyrene and vinyltoluene; hydroxyl group-containing monomers such as 2-hydroxyethyl (meth)acrylate, 3-hydroxypropyl (meth)acrylate and 4-hydroxybutyl (meth)acrylate; epoxy group-containing acrylic monomers such as glycidyl (meth)acrylate; alkoxyalkyl (meth)acrylate monomers such as methoxyethyl (meth)acrylate and ethoxyethyl (meth)acrylate; lactone acrylate monomers such as ε-caprolactone acrylate; olefin monomers such as ethylene, propylene, isoprene and butadiene; vinyl ether monomers such as methyl vinyl ether and ethyl vinyl ether; morpholine (meth)acrylate; and hetero ring-containing vinyl monomers such as N-vinyl-2-pyrrolidone, N-vinylpyridine, N-vinylpiperidone, N-vinylpyrimidine, N-vinylpiperazine, N-vinylpyrazine, N-vinylpyrrole, N-vinylimidazole and N-vinyloxazole.

As the copolymerizable monomer in the acrylic polymer (A), usable are polyfunctional monomers such as hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, urethane acrylate, divinylbenzene, butyl di(meth)acrylate and hexyl di(meth)acrylate.

As the copolymerizable monomer, preferred are functional group-containing monomers, and more preferred are acidic functional group-containing monomers (especially carboxyl group-containing monomers such as (meth)acrylic acid). Such copolymerizable monomer may be used either singly or in combination of two or more thereof.

Since the functional group-containing monomers such as acidic functional group-containing monomers are effective for improving the coagulation force and the adhesion force of the polymer, it is preferable to use them in accordance with the object of the polymer. However, if the monomer of the type is added too much, then it may harden the adhesive and may have significant influences on the adhesive characteristics. Therefore, the amount of the functional group-containing monomer is preferably 30 parts by weight or less, more preferably 10 parts by weight or less, even more preferably 5 parts by weight or less, with respect to 100 parts by weight of the main monomer component, (meth)acrylate (especially alkyl (meth)acrylate) in the acrylic polymer (A).

In the invention, when the acrylic polymer (A) that contains a functional group-containing monomer as the monomer component is applied onto a polyolefin substrate containing a polyvalent metal salt (for example, magnesium hydroxide or aluminium hydroxide), then the ionized metal salt may react with the functional group in the acrylic polymer (A) to promote the crosslinking of the adhesive, to which, therefore, attention should be paid. Accordingly, although it depends on the type of the substrate, in the case where a polyvalent metal salt-containing polyolefin substrate is used as the support, then the amount of the functional group-containing monomer is preferably 5 parts by weight or less, more preferably 3 parts by weight or less, even more preferably 1.5 parts by weight or less, with respect to 100 parts by weight of the main monomer component, (meth)acrylate (especially alkyl (meth)acrylate) in the acrylic polymer (A).

In the invention, the acrylic polymer (A) may also contain, as the copolymirizable monomer, an ethylenic unsaturated monomer having a hydrolyzing silicon atom-containing group (this may be referred to as "silane monomer"). In other words, the acrylic polymer (A) may have a constitutive unit of a silane monomer as the monomer component therein. The acrylic polymer (A) of this type has at least one hydrolyzing silicon atom-containing group in the molecule. Using such a silane monomer makes it possible to readily and stably prepare an acrylic polymer with a hydrolyzing silicon atom-containing group uniformly or almost uniformly introduced into the molecule. Accordingly, when a silane monomer is used as the copolymerizable monomer, the pressure-sensitive adhesive layer may be copolymierzed through the condensation of the hydrolyzing silicon atom-containing group introduced into the acrylic polymer (A) without adding a crosslinking agent thereto. Therefore, a pressure-sensitive adhesive layer of stable quality may be produced stably and at good producibility, without being influenced by the dispersibility of a crosslinking agent nor influenced by the drying condition that may fluctuate in drying.

In the silane monomer, examples of the hydrolyzing silicon atom-containing group include a silyl group having from 1 to 3 alkoxy groups, for example, a trialkoxysilyl group such as a trimethoxysilyl group, a triethoxysilyl group, a tripropoxysilyl group, a triisopropoxysilyl group, a tributoxysilyl group or a triisobutoxysilyl group; a dialkoxyalkylsilyl group such as a dimethoxymethylsilyl group, a dimethoxyethylsilyl group, a dimethoxypropylsilyl group, a dimethoxyisopropylsilyl group, a dimethoxybutylsilyl group, a diethoxymethylsilyl group, a diethoxyethylsilyl group, a diethoxypropylsilyl group, a diethoxyisopropylsilyl group or a diethoxybutylsilyl group; and an alkoxydiaklylsilyl group such as a methoxydimethylsilyl group, a methoxydiethylsilyl group, a methoxydipropylsilyl group, a methoxydiisopropylsilyl group, a methoxydibutylsilyl group, an ethoxydimethylsilyl group, anethoxydiethylsilyl group, an ethoxydipropylsilyl group, an ethoxydiisopropylsilyl group or an ethoxydibutylsilyl group.

In the case where the silyl group having alkoxy group has plural (2 or 3) alkoxy groups, then the plural alkoxy groups may be all the same or may be partly the same or may all different. In the case where the silyl group having alkoxy group has two other groups than the alkoxy group (for example, alkyl group), then the other groups may be the same or different.

In the invention, as the silane monomer, preferred are silane compounds having an ethylenic unsaturated bond site and also having a hydrolyzing silicon atom-containing group, such as (meth)acryloyloxyalkylsilane derivatives, vinylsilane derivatives, vinylalkylsilane derivatives, in view of their excellent copolymerizability with (meth)acrylate (especially alkyl (meth)acrylates).

Examples of the (meth)acryloyloxyalkylsilane derivatives include silane compounds in which a silyl group having from 1 to 3 alkoxy groups bonds to a (meth)acryloyloxy group (acryloyloxy group or methacryloyloxy group), via an alkylene group therebetween; and specific examples thereof include (meth)acryloyloxyalkyl-trialkoxysilanes, (meth)acryloyloxyalkyl-dialkoxy-alkylsilanes, and (meth)acryloyloxyalkyl-alkoxy-dialkylsilanes. Examples of the (meth)acryloyloxyalkyl-trialkoxysilanes include (meth)acryloyloxymethyltrimethoxysilane, (meth)acryloyloxymethyltriethoxysilane, 2-(meth)acryloyloxyethyltrimethoxysilane, 2-(meth)acryloyloxyethyltriethoxysilane, 3-(meth)acryloyloxypropyltrimethoxysilane, 3-(meth)acryloyloxypropyltriethoxysilane, 3-(meth)acryloyloxypropyltripropoxysilane, 3-(meth)acryloyloxypropyltriisopropoxysilane, 3-(meth)acryloyloxypropyltributoxysilane, 4-(meth)acryloyloxybutyltrimethoxysilane, and 4-(meth)acryloyoxybutyltriethoxysilane, as well as 6-(meth)acryloyloxyhexyltrimethoyxsilane, 6-(meth)acryloyloxyhexyltriethoxysilane, 8-(meth)acryloyloxyoctyltrimethoxysilane, 8-(meth)acryloyloxyoctyltriethoxysilane, 10-(meth)acryloyloxydecyltrimethoxysilane, 10-(meth)acryloyloxydecyltriethoxysilane, 12-(meth)acryloyloxydodecyltrimethoxysilane, and 12-(meth)acryloyloxydodecyltriethoxysilane.

Examples of the (meth)acryloyloxyalkyl-dialkoxy-alkylsilanes include (meth)acryloyloxymethyldimethoxymethylsilane, (meth)acryloyloxymethyldimethoxyethylsilane, (meth)acryloyloxymethyldiethoxymethylsilane, (meth)acryloyloxymethyldiethoxyethylsilane, 2-(meth)acryloyloxyethyldimethoxymethylsilane, 2-(meth)acryloyloxyethyldimethoxyethylsilane, 2-(meth)acryloyloxyethyldiethoxymethylsilane, 2-(meth)acryloyloxyethyldiethoxyethylsilane, 3-(meth)acryloyloxypropyldimethoxymethylsilane, 3-(meth)acryloyloxypropyldimethoxyethylsilane, 3-(meth)acryloyloxypropyldimethoxymethylsilane, and 3-(meth)acryloyloxypropyldiethoxyethylsilane.

Further, examples of the (meth)acryloyloxyalkyl-alkoxy-dialkylsilanes include (meth)acryloyloxymethylmethoxydimethylsilane, (meth)acryloyloxymethylmethoxydiethylsilane, (meth)acryloyloxymethylethoxydimethylsilane, (meth)acryloyloxymethylethoxydiethylsilane, 2-(meth)acryloyloxyethylmethoxidimethylsilane, 2-(meth)acryloyloxyethylmethoxydiethylsilane, 2-(meth)acryloyloxyethylethoxydimethylsilane, 2-(meth)acryloyloxyethylethoxydiethylsilane, 3-(meth)acryloyloxypropylmethoxydimethylsilane, 3-(meth)acryloyloxypropylmethoxydiethylsilane, 3-(meth)acryloyloxypropylethoxydimethylsilane, and 3-(meth)acryloyloxypropylethoxydiethylsilane.

The vinylsilane derivatives include, for example, silane compounds in which a silyl group having from 1 to 3 alkoxy groups bonds directly to a vinyl group; and specific examples thereof include vinyl-trialkoxysilanes (e.g., vinyltrimethoxysilane and vinyltriethoxysilane), vinyl-dialkoxy-alkylsilanes (e.g., vinyldimethoxymethylsilane, vinyldimethoxyethylsilane, vinyldiethoxymethylsilane and vinyldiethoxyethylsilane), and vinyl-alkoxy-dialkylsilanes (e.g., vinylmethoxydimethylsilane, vinylmethoxydiethylsilane, vinylethoxydimethylsilane and vinylethoxydiethylsilane).

The vinylalkylsilane derivatives include, for example, silane compounds in which a silyl group having from 1 to 3 alkoxy groups bonds to a vinyl group via an alkylene group therebetween; and specific examples thereof include vinylalkyl-trialkoxysilanes, vinylalkyl-dialkoxy-alkylsilanes and vinylalkyl-alkoxy-dialkylsilanes. Examples of the vinylalkyl-trialkoxysilanes include vinylmethyltrimethoxysilane, vinylmethyltriethoxysilane, 2-vinylethyltrimethoxysilane, 2-vinylethyltriethoxysilane, 3-vinylpropyltrimethoxysilane, 3-vinylpropyltriethoxysilane, 4-vinylbutyltrimethoxysilane, 4-vinylbutyltriethoxysilane, 6-vinylhexyltrimethoxysilane, 6-vinylhexyltriethoxysilane, 8-vinyloctyltriemthoxysilane, 8-vinyloctyltriethoxysilane, 10-vinyldecyltrimethoxysilane, 10-vinyldecyltriethoxysilane, 12-vinyldodecyltrimethoxysilane and 12-vinyldodecyltriethoxysilane. Examples of the vinylalkyl-dialkoxy-alkylsilanes and the vinylalkyl-alkoxy-dialkylsilanes include those corresponding to the examples of the above-mentioned vinylalkyl-trialkoxysilanes.

The amount of the silane monomer for use herein may be suitably determined depending on the type of the (meth)acrylate, the crosslinking degree of the acrylic polymer and the use of the adhesive composition. Concretely, the proportion of the silane monomer may be from 0.001 to 0.5 parts by weight, preferably from 0.001 to 0.1 parts by weight, more preferably from 0.001 to 0.01 parts by weight, with respect to 100 parts by weight of the monomer mixture except the silane monomer of the monomer mixture, that contains a (meth)acrylate as the main ingredient thereof (including a single monomer).

During polymerization such as emulsion polymerization, the monomer components may be introduced into the reaction system by previously feeding them to the reaction system all at a time, or by continuously or intermittently feeding them thereinto; or a part of the monomer components may be fed into the reaction system all at a time, and the remaining part thereof may be continuously or intermittently dropwise added to the system to thereby introduce the monomer component into the reaction system. In other words, the polymerization mode for emulsion polymerization may be any of ordinary lump polymerization, continuous dropwise addition polymerization or intermittent dropwise addition polymerization. The polymerization may be attained stepwise. Concretely, for example, after polymerization has been made once, another monomer component may be added thereto to further carry out additional polymerization.

In the emulsion-type acrylic polymer (A) in the invention, the emulsion particles of the acrylic polymer have a mean particle size of 0.2 µm or less, as mentioned above; and therefore, it is important to carry out the emulsion polymerization in order that the emulsion particles formed could have a mean particle size of 0.2 µm or less. Accordingly, the emulsion-type acrylic polymer (A) may be prepared through emulsion polymerization under the condition to give emulsion particles having a mean particle size of 0.2 µm or less. The condition for such emulsion polymerization may be suitably determined, depending on the polymerization mode of lump polymerization, continuous dropwise addition polymerization or intermittent dropwise addition polymerization. For example, in emulsion polymerization in a mode of lump polymerization, an acrylic emulsion in which the emulsion particles have a mean particle size of 0.2 µm or less may be produced in almost all cases; but by controlling the amount of the emulsifier, the particle size may be further controlled in some degree. For example, the relation between the amount of the emulsifier (parts by weight, relative to 100 parts by weight of the acrylic polymer to be obtained) and the mean particle size (µm) of the emulsion particles in the acrylic emulsion may be as follows: Amount of emulsifier (parts by weight)/mean particle size (µm) = 1/0.138, 3/0.121, 5/0.099 or 10/0.092. In emulsion polymerization in a mode of lump polymerization, it is effective to employ a method that includes polymerizing an emulsified monomer component at a temperature lower than a predetermined reaction initiation temperature of the polymerization initiator (for example, 80 to 90°C, preferably 85°C or so), and gradually elevating the reaction temperature, in view of the temperature control and the effect of enlarging the molecular weight of the polymer. On the other hand, in emulsion polymerization in a mode of continuous dropwise addition polymerization, employable is a method of dropwise adding an emulsified monomer component to an aqueous system to which an emulsifier has been previously added. Concretely, an emulsifier is added to an aqueous system (aqueous phase) in a ratio of from 0.05/1 (preferably from 0.1/0.5) to the acrylic polymer to be obtained, and an acrylic emulsion may be thus prepared, in which the emulsion particles have a mean particle size of 0.2 µm or less. In this case, when the dropping speed of the monomer component is increased, then the mean particle size of the polymer may be smaller; and when the amount of the emulsifier to be previously fed into the aqueous phase is increased, then the mean particle size of the polymer may be smaller. To that effect, by suitably controlling the dropping speed of the monomer component and the amount of the emulsifier to be previously fed into the aqueous phase, the mean particle size of the polymer to be produced may be controlled. Further, in emulsion polymerization in a mode of intermittent dropwise addition polymerization, the method of emulsion polymerization in a mode of lump polymerization and the method of emulsion polymerization in a mode of continuous dropwise addition polymerization may be combined.

The temperature during polymerization may be suitably determined depending on the type of the initiator used, and for example, it may fall within a range of from 20 to 100°C.

When the emulsion-type acrylic polymer (A) is prepared through emulsion polymerization, one or more known reactive emulsifiers is used either singly or in combination thereof. However, for retarding or preventing the emulsifier from depositing on the surface of the pressure-sensitive adhesive layer whereby the adhesion strength of the pressure-sensitive adhesive layer may be lowered or an object to which the pressure-sensitive adhesive tape is applied may be contaminated with the emulsifier, the emulsifier for use herein is a reactive emulsifier having a group copolymerizable with a (meth)acrylate (for example, a group having an ethylenic unsaturated bond site). The reactive emulsifier may bond to the molecular chain in the adhesive composition (especially to the molecular chain of the acrylic polymer (A)), and is therefore retarded or prevented from depositing on or transferring onto the surface of the pressure-sensitive adhesive layer. As a result, the adhesion strength of the pressure-sensitive adhesive layer may be thereby effectively retarded or prevented from lowering with time and the adherend to which the pressure-sensitive adhesive tape is applied may be effectively retarded or prevented from being contaminated with time. Accordingly, the emulsion-type acrylic polymer (A) is prepared through emulsion polymerization of a monomer component in the presence of a reactive emulsifier.

The reactive emulsifier has a group copolymerizable with a (meth)acrylate and have an emulsification function. For example, it may be a reactive emulsifier having a radical-polymerizing functional group (radical-reactive group) such as a propenyl group or an allyl ether group introduced into an emulsifier, for example an anionic emulsifier such as sodium laurylsulfate, ammonium laurylsulfate, sodium dodecylbenzenesulfonate, sodium polyoxyethylene alkyl ether sulfate, ammonium polyoxyethylene alkylphenyl ether sulfate, sodium polyoxyethylene alkylphenyl ether sulfate or sodium polyoxyethylene alkylsulfosuccinate; a nonionic emulsifier such as polyoxyethylene alkyl ether, polyoxyethylene alkylphenyl ether, polyoxyethylene fatty acid ester or polyoxyethylene-polyoxypropylene block polymer; or a nonionic anionic emulsifier such as sodium polyoxyethylene alkylether sulfate, ammonium polyoxyethylene alkylphenyl ether sulfate, sodium polyoxyethylene alkylphenyl ether sulfate or sodium polyoxyethylene alkylsulfosuccinate (or a reactive emulsifier having a morphology similar to it).

The emulsifier other than the reactive emulsifier (non-reactive emulsifier) for use herein is not particularly limited and may be selected from any conventional ones. Concretely, examples of the non-reactive emulsifiers include anionic emulsifiers such as sodium laurylsulfate, ammonium laurylsulfate, sodium dodecylbenzenesulfonate, sodium polyoxyethylene alkyl ether sulfate, ammonium polyoxyethylene alkylphenyl ether sulfate, sodium polyoxyethylene alkylphenyl ether sulfate and sodium polyoxyethylene-alkylsulfosuccinate; nonionic emulsifiers such as polyoxyethylene alkyl ether, polyoxyethylene alkylphenyl ether, polyoxyethylene fatty acid ester and polyoxyethylene-polyoxypropylene block polymer; and nonionic anionic emulsifiers such as sodium polyoxyethylene alkylether sulfate, ammonium polyoxyethylene alkylphenyl ether sulfate, sodium polyoxyethylene alkylphenyl ether sulfate and sodium polyoxyethylene alkylsulfosuccinate.

It is important that the amount of the emulsifier (especially, reactive emulsifier) to be used is suitably determined depending on the amount of the system to be emulsified with it; and in general, it may be from 0.1 to 20 parts by weight (preferably from 1 to 10 parts by weight) with respect to 100 parts by weight of the monomer mixture.

In the invention, a polymerization initiator and a chain transfer agent may be used in polymerization to obtain the emulsion-type acrylic polymer (A). The polymerization initiator and the chain transfer agent are not particularly limited and may be selected from any conventional ones. Concretely, examples of the polymerization initiator include azo-type polymerization initiators such as 2,2'-azobisisobutyronitrile, 2,2'-azobis(2-methylpropionamidine) disulfide, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane), dimethyl 2,2'-azobis(2-methylpropionate), 2,2'-azobis[2-methyl-N-(phenylmethyl)-propionamidine]dihydrochloride, 2,2'-azobis[2-(3,4,5,6-tetrahydropyrimidin-2-yl)propane]dihydrochloride and 2,2'-azobis[2-(2-imidazolin-2-yl)propane]; persulfate-type polymerization initiators such as potassium persulfate and ammonium persulfate; peroxide-type polymerization initiators such as benzoyl peroxide, hydrogen peroxide, t-butylhydroperoxide, di-t-butylperoxide, t-butyl peroxybenzoate, dicumyl peroxide, 1,1-bis(t-butylperoxy)-3,3,5-trimethylcyclohexane, 1, 1-bis(t-butylperoxy)cyclododecane, 3,3,5-trimethylcyclohexanoyl peroxide and t-butyl peroxypivalate; and redox-type polymerization initiators containing a combination of persulfate and sodium hydrogensulfite. Such polymerization initiators may be used either singly or in combination of two or more thereof. The amount of the polymerization initiator to be used is not particularly limited and may be suitably determined depending on the polymerization method, the polymerization reactivity, the type and the amount of the monomer component, and the type of the polymerization initiator. For example, the amount may be from 0.005 to 1 part by weight with respect to 100 parts by weight of the monomer mixture.

Examples of the chain transfer agent include laurylmercaptan, glycidylmercaptan, mercaptoacetic acid, 2-mercaptoethanol, thioglycolic acid, 2-ethylhexyl thioglycolate and 2,3-dimercapto-1-propanol.

### Petroleum Resin (B)

The petroleum resin (B) is not particularly limited and it may be any petroleum resin (hydrocarbon resin) utilizable as a tackifying resin. The petroleum resin (B) may be selected from known petroleum resins such as aromatic petroleum resin, aliphatic petroleum resin, alicyclic petroleum resin (aliphatic cyclic petroleum resin), aliphatic/aromatic petroleum resin, aliphatic/alicyclic petroleum resin, hydrogenated petroleum resin, coumarone resin and coumarone-indene resin. The petroleum resin (B) may be used either singly or in combination of two or more thereof.

Concretely, as the petroleum resin (B), the aromatic petroleum resin may be, for example, a polymer in which one or more kinds of vinyl group-having aromatic hydrocarbons having from 8 to 10 carbon atoms (e.g., styrene, o-vinyltoluene, m-vinyltoluene, p-vinyltoluene, α-methylstyrene, β-methylstyrene, indene or methylindene) are used. As the aromatic petroleum resin, preferred is an aromatic petroleum resin (so-called "C9 petroleum resin") obtained from a fraction of vinyltoluene, indene or the like (so-called "C9 petroleum fraction").

The aliphatic petroleum resin may be, for example, a polymer in which one or more kinds of olefins and dienes having 4 or 5 carbon atoms (e.g., olefins such as butene-1, isobutylene or pentene-1; and dienes such as butadiene, piperylene (1,3-pentadiene) or isoprene). As the aliphatic petroleum resin, preferred is an aliphatic petroleum resin (so-called "C4 petroleum resin" or "C5 petroleum resin") obtained from a fraction of butadiene, piperylene, isoprene or the like (so-called "C4 petroleum fraction" or "C5 petroleum fraction").

Examples of the alicyclic petroleum resin include alicyclic hydrocarbon resins prepared through cyclizing dimerization of an aliphatic petroleum resin (so-called "C4 petroleum resin" or "C5 petroleum resin") followed by polymerization thereof; polymers of a cyclic diene compound (such as cyclopentadiene, dicyclopentadiene, ethylidene-norbornene, dipentene, ethylidene-bicycloheptene, vinylcycloheptene, tetrahydroindene, vinylcyclohexene or limonene) or the hydrogenates thereof; and alicyclic hydrocarbon resins prepared through hydrogenation of the above-mentioned aromatic hydrocarbon resin, or the aliphatic/aromatic petroleum resin mentioned below.

Examples of the aliphatic/aromatic petroleum resin include a styrene-olefin copolymer. As the aliphatic/aromatic petroleum resin, usable is a so-called "C5/C9 copolymer petroleum resin", etc.

As the petroleum resin (B), preferred is the aliphatic petroleum resin, and more preferred is a C5 petroleum resin. As the petroleum resin (B) of the type, for example, usable are commercial products such as AP-1085 (manufactured by Arakawa Chemical Industries, Ltd.).

The softening point (softening temperature) of the petroleum resin (B) is not specifically limited and is, for example, preferably from 70 to 130°C. The softening point of the petroleum resin (B) may be measured, for example, according to JIS K 5601-2-2 (ring and ball method).

In general, petroleum resin is poorly miscible with acrylic polymer, and is greatly influenced by a lapse of time and a storage temperature. Accordingly, even when a petroleum resin is exemplified as a tackifying resin (tackifier) usable for acrylic polymer, it is hardly used for acrylic polymer from the viewpoint of its safety, and petroleum resin is rarely preferably used for acrylic polymer. However, in the invention, petroleum resin poorly miscible with acrylic polymer is daringly used, as combined with acrylic polymer, and this is a characteristic point of the invention. Specifically, in the emulsion-type acrylic adhesive composition in the invention that contains an emulsion-type acrylic polymer as the base polymer therein, a petroleum resin that is poorly miscible with acrylic polymer and is not substantially used for the polymer is daringly used, whereby the rewinding power of the pressure-sensitive adhesive tape that has the pressure-sensitive adhesive layer formed of the emulsion-type acrylic adhesive composition is effectively improved, and the effect is not conventionally known in the art. Moreover, in the invention, this technology is applied to a pressure-sensitive adhesive tape for bundling, of which the rewinding operability is important, and as a result, the pressure-sensitive adhesive tape of the invention can be rewound at a suitable rewinding power and its rewinding operability can be thereby greatly improved.

Regarding its proportion, when the amount of the petroleum resin (B) is too small, then the effect of improving the rewinding capability of the pressure-sensitive adhesive tape may be poor; while when it is too large, then the stability of the emulsion-type acrylic adhesive composition of the pressure-sensitive adhesive layer maybe lowered owing to the poor miscibility of the resin with the base polymer, emulsion-type acrylic polymer (A), and in such a case, for example, the adhesion strength of the pressure-sensitive adhesive tape may greatly change with time and the adhesive may remain on its surface in the course of rewinding of the pressure-sensitive adhesive tape. Accordingly, the proportion of the petroleum resin (B) at which the pressure-sensitive adhesive tape can exhibit its best rewinding power to the maximum is from 1 to 50 parts by weight, preferably from 5 to 40 parts by weight, with respect to 100 parts by weight of the emulsion-type acrylic polymer (A).

### Rosin Resin (C)

The rosin resin (C) is not particularly limited and may be any rosin resin utilizable as a tackifying resin. The rosin resin (C) may be selected from conventional rosin resins, and examples thereof include non-modified rosins (natural rosins) such as gum rosin, wood rosin and toll oil rosin; modified rosins prepared by modifying such non-modified rosins through polymerization, disproportionation, hydrogenation (e.g., polymerized rosins, stabilized rosins, disproportionated rosins, completely hydrogenated rosins, partially hydrogenated rosins, and other chemically-modified rosins); and other various rosin derivatives. Examples of the rosin derivatives include rosin ester compounds prepared by esterifying non-modified rosins with alcohols (non-modified rosin esters); modified rosin ester compounds prepared by esterifying polymerized rosins, stabilized rosins, disproportionated rosins, completely hydrogenated rosins or partially hydrogenated rosins with alcohols (e.g., polymerized rosin esters, stabilized rosin esters, disproportionated rosin esters, completely hydrogenated rosin esters or partially hydrogenated rosin esters); unsaturated fatty acid-modified rosin resins prepared by modifying non-modified rosins or modified rosins (e.g., polymerized rosins, stabilized rosins, disproportionated rosins, completely hydrogenated rosins or partially hydrogenated rosins) with unsaturated fatty acids; unsaturated fatty acid-modified rosin ester resins prepared by modifying rosin ester resins with unsaturated fatty acids; rosin alcohol resins prepared by reducing non-modified rosins, modified rosins (e.g., polymerized rosins, stabilized rosins, disproportionated rosins, completely hydrogenated rosins or partially hydrogenated rosins), unsaturated fatty acid-modified rosin resins or unsaturated fatty acid-modified rosin ester resins, at their carboxyl group; and metal salts of rosin resins (especially rosin ester resins), such as non-modified rosins, modified rosins, and various rosin derivatives. The rosin resin (C) may be used either singly or in combination of two or more thereof.

The alcohols usable in preparing the rosin ester resins are preferably polyalcohols, for example, dialcohols such as ethylene glycol, diethylene glycol, propylene glycol, neopentyl glycol, trimethylene glycol, tetramethylene glycol, 1,3-butanediol and 1,5-hexanediol; trialcohols such as glycerin, trimethylolethane, trimethylolpropane and triethylolethane; tetralcohols such as pentaerythritol and diglycerin; hexalcohols such as dipentaerythritol, and monoalcohols such as methanol and ethanol may also be used. For the alcohols, also usable are aminoalcohols such as triethanolamine, tripropanolamine, triisopropanolamine, N-isobutyldiethanolamine and N-n-butyldiethanolamine.

Examples of the unsaturated fatty acids for use in preparing the unsaturated fatty acid-modified rosin resins and the unsaturated fatty acid-modified rosin ester resins include α,β-unaturated carboxylic acids such as fumaric acid, maleic acid or its anhydride, itaconic acid, citraconic acid or its anhydride, acrylic acid and methacrylic acid.

In the invention, rosin ester resins are preferably used as the rosin resin (C). More preferred are polymerized rosin esters and stabilized rosin esters. As the rosin resin (C) of the type, usable are commercial products, for example, E-865 (manufactured by Arakawa Chemical Industries, Ltd.).

The softening point (softening temperature) of the rosin resin (C) is not particularly limited and is, for example, preferably from 80 to 180°C, more preferably from 120 to 170°C. The softening point of the rosin resin (C) may be measured, for example, according to JIS K 5601-2-2 (ring and ball method).

The proportion of the rosin resin (C) is from 1 to 50 parts by weight, preferably from 5 to 40 parts by weight, with respect to 100 parts by weight of the emulsion-type acrylic polymer (A). When the proportion of the rosin resin (C) is smaller than 1 part by weight with respect to 100 parts by weight of the emulsion-type acrylic polymer (A), then the pressure-sensitive adhesive tape cannot sufficiently exhibit its edge-peeling resistance, which means that the tape does not peel off from its edge, when used in bundling. On the other hand, when it is larger than 50 parts by weight, then the emulsion-type acrylic adhesive composition may be too hard, and in such a case, the pressure-sensitive adhesive tape cannot have suitable tackiness and its rewinding power may be too small.

The total proportion (sum total) of the petroleum resin (B) and the rosin resin (C) is preferably from 10 to 60 parts by weight, more preferably from 10 to 50 parts by weight, with respect to 100 parts by weight of the emulsion-type acrylic polymer (A). When the total proportion of the petroleum resin (B) and the rosin resin (C) is larger than 60 parts by weight with respect to 100 parts by weight of the emulsion-type acrylic polymer (A), then the influence of the tackfying resin to be in the emulsion-type acrylic adhesive composition may be too large and the tackiness of the adhesive composition tends to be low. When a tackfying resin that is extremely poorly miscible with the polymer is used, then the tackfying resin may segregate on the surface of the adhesive, thereby interfering with the use of the pressure-sensitive adhesive tape.

Regarding the concrete amount of the petroleum resin (B) and the rosin resin (B), their amount must satisfy the above-mentioned proportion (from 1 to 50 parts by weight with respect to 100 parts by weight of the emulsion-type acrylic polymer (A), respectively), and their amount may be suitably selected from that range depending on the thickness and the hardness of the polyolefin substrate used and the composition of the emulsion-type acrylic adhesive composition. For example, when a thick polyolefin substrate or a hard polyolefin substrate is used, since there is a tendency that the edge-peeling resistance of the pressure-sensitive adhesive tape may lower, it is desirable that the proportion of the rosin resin (C) is high within the above-mentioned range, whereby the pressure-sensitive adhesive tape may have good edge-peeling resistance. On the other hand, when a thin polyolefin substrate or a relatively soft polyolefin substrate that is advantageous for edge-peeling resistance is used, then the total amount of the petroleum resin (B) and the rosin resin (C) may be reduced. Further, when the rewinding power of the pressure-sensitive adhesive tape is small, then the amount of the petroleum resin (B) may be increased within the above-mentioned range, whereby the power may be increased, and in that manner, the pressure-sensitive adhesive tape may thereby exhibit a suitable rewinding powder.

### Emulsion-type Acrylic Adhesive Composition

The emulsion-type acrylic adhesive composition in the invention may contain a plasticizer. The plasticizer is an optional ingredient in the composition. By adding a plasticizer to the emulsion-type acrylic adhesive composition, when the emulsion-type acrylic adhesive composition is used in forming the pressure-sensitive adhesive layer of the pressure-sensitive adhesive tape of the invention, then the plasticizer may migrate into the polyolefin substrate to thereby exhibit an effect of softening the polyolefin substrate. Accordingly, the polyolefin substrate is softened, and the edge-peeling resistance of the pressure-sensitive adhesive tape may be thereby improved. From this viewpoint, the edge-peeling resistance of the pressure-sensitive adhesive tape may be much more improved by the addition of the plasticizer to the adhesive. Examples of the plasticizer usable herein include phthalate-type plasticizers (e.g., dibutyl phthalate (DBP), diheptyl phthalate (DHP), dioctyl phthalate (DOP), diisononyl phthalate, diisodecyl phthalate (DIDP), ditridecyl phthalate (DTDP), ditriisodecyl phthalate, butyllauryl phthalate and butylbenzyl phthalate), and trimellitate-type plasticizers (e.g., trioctyl trimellitate (TOTM) and tri-n-octyl trimellitate). Not limited to these, also usable in the invention are fatty acid-type plasticizers (e.g., tributyl citrate, dioctyl adipate (DOA), dioctyl azelate (DOZ), dioctyl sebacate (DOS) and methyl acetylricinoleate), phosphate-type plasticizers (e.g., tricresyl phosphate (TCP) and trioctyl phosphate (TOP)), epoxy-type plasticizers, and polyester-type plasticizers. Such plasticizers may be used herein either singly or in combination of two or more thereof. Although the amount of the plasticizer is not particularly limited, when it is added too much, the adhesive may be too much softened, thereby causing adhesion failure or residue-prone adhesive. Accordingly, the amount of the plasticizer is preferably 30 parts by weight or less (for example, from 1 to 30 parts by weight) with respect to 100 parts by weight of the emulsion-type acrylic polymer (A). When the amount of the plasticizer is too small, then the effect of the plasticizer to soften the polyolefin substrate may be decreased.

The emulsion-type acrylic adhesive composition may contain a crosslinking agent. The crosslinking agent is not particularly limited, and the examples thereof include epoxy-type crosslinking agents, isocyanate-type crosslinking agents and oxazoline-type crosslinking agents. Such crosslinking agents may be used herein either singly or in combination of two or more thereof. The amount of the crosslinking agent is not particularly limited and may be any ordinary one generally used in adhesive compositions.

Further, the emulsion-type acrylic adhesive composition may contain any other tackifying resin than the petroleum resin (B) and the rosin resin (C) (for example, terpene-type tackifying resin, phenol-type tackifying resin, epoxy-type tackifying resin, polyamide-type tackifying resin, ketone-type tackifying resin and elastomer-type tackifying resin), so long as the effect of the invention is not impaired.

In the invention, the emulsion-type acrylic adhesive composition may contain various additives, if desired. The additives may be selected from known additives, for example, the above-mentioned plasticizers (softeners), tackifying resins and crosslinking resins, and also viscosity improvers, UV absorbents, antioxidants, fillers, colorants, antistatic agents, foaming agents and surfactants.

The emulsion-type acrylic adhesive composition may be prepared, for example, by mixing the above-mentioned emulsion-type acrylic polymer (A), petroleum resin (B) and rosin resin (C) and optionally plasticizer and crosslinking agent and other additives.

### Substrate

The pressure-sensitive adhesive tape of the invention includes a polyolefin substrate formed of a polyolefin resin composition containing a polyolefin resin and a metal hydroxide. Examples of the polyolefin resin in the polyolefin substrate include polyolefin resins containing an α-olefin as the monomer component thereof, such as polyethylene (PE), polypropylene (PP), ethylene-propylene copolymer and ethylene-vinyl acetate copolymer (EVA). Such polyolefin resins may be used herein either singly or in combination of two or more thereof.

In the invention, the substrate is preferably a polyolefin substrate which does not substantially contain a halogen atom. The term "not substantially containing a halogen atom" as referred to herein means that a substance containing a halogen atom in the molecule is not used as the material to constitute the polyolefin substrate (olefinic resin composition). Accordingly, when the substrate is analyzed for its composition with an analyzer, the detection of a halogen atom on a minor level in the substrate material (for example, a halogen atom resulting from a halogen atom-containing substance used as a catalyst in producing the constitutive material of the substrate is mixed in the constitutive material of the substrate, and as a result, a minor amount of the halogen atom is detected in the substrate) is accepted.

More concretely, examples of the polyolefin resin in the polyolefin substrate include polyethylene (e.g., low-density polyethylene, linear low-density polyethylene, ultra-low-density polyethylene, middle-density polyethylene and high-density polyethylene), polypropylene, polybutene and polybutadiene, as well as copolymer (especially random copolymer) of ethylene and/or propylene with any other α-olefin such as ethylene-propylene copolymer (random copolymer). As the polyolefin resin, preferred are polyethylene and polypropylene; and more preferred is polyethylene. Such polyolefin resins may be used herein either singly or in combination of two or more thereof.

The polyolefin resin may be used in combination with any other resin. As such other resin, preferred is a thermoplastic resin having a carbonyl oxygen atom in the molecule (molecular skeleton) from the viewpoint of imparting suitable flexibility to the substrate. As the thermoplastic resin having a carbonyl oxygen atom (oxygen atom assigned to carbonyl group) in the molecule, preferred is a soft polyolefin resin having a carbonyl oxygen atom in the molecule (this may be referred to as "carbonyl group-containing polyolefin resin"). Of course, since the carbonyl group-containing polyolefin is a kind of a polyolefin resin, it may be used as the polyolefin resin serving as the constitutive material of the substrate of the pressure-sensitive adhesive tape. In other words, the carbonyl group-containing polyolefin resin may be used as the polyolefin resin for the substrate either singly or as combined with any other polyolefin resin.

Preferred examples of the carbonyl group-containing polyolefin resin include carbonyl group-having ethylenic copolymers or their metal salts (ionomers) that are produced using, as the monomer component thereof, ethylene, and a vinyl ester compound and/or an α,β-unsaturated carboxylic acid or the derivative thereof (e.g., anhydride, ester and chloride). The carbonyl group-having ethylenic copolymers or their metal salts (ionomers) generally have a melting point of 120°C or less, preferably from 40 to 100°C. The melting point may be measured, using a differential scanning calorimeter (DSC).

Examples of the vinyl ester compound include an ester of a vinyl alcohol with a lower carboxylic acid (vinyl ester of lower carboxylic acid), such as vinyl acetate. Examples of the α,β-unsaturated carboxylic acid include (meth)acrylic acid, maleic acid, fumaric acid and itaconic acid. Examples of the α,β-unsaturated carboxylic acid anhydride, which is a kind of the α,β-unsaturated carboxylic acid derivative, include maleic anhydride and itaconic anhydride. Examples of the α,β-unsaturated carboxylic acid ester include (meth)acrylates [e.g., alkyl (meth)acrylates such as methyl (meth)acrylate, ethyl (meth)acrylate, propyl (meth)acrylate, isopropyl (meth)acrylate, n-butyl meth(acrylate), isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, lauryl (meth)acrylate and stearyl (meth)acrylate; cycloalkyl (meth)acrylates such as cyclohexyl (meth)acrylate; aryl (meth)acrylates; and functional group-containing (meth)acrylates such as glycidyl (meth)acrylate and 2-hydroxyethyl (meth)acrylate], maleates [e.g., (mono or di)alkyl maleates such as monomethyl maleate, monoethyl maleate and diethyl maleate], and fumarates [e.g., (mono or di)alkyl fumarates such as monomethyl fumarate and monoethyl fumarate]. As the vinyl ester compound and/or the α,β-unsaturated carboxylic acid or the derivative thereof, preferred are vinyl acetate, (meth)acrylic acid, and (meth)acrylates; and as the (meth)acrylates, preferred are alkyl (meth)acrylates, especially preferred are ethyl (meth)acrylate, and even more preferred is ethyl acrylate. Such vinyl ester compounds and/or α,β-unsaturated carboxylic acids or their derivatives may be used herein either singly or in combination of two or more thereof.

Preferred examples of the carbonyl group-having ethylenic copolymers or their metal salts (ionomers) include ethylene-acrylic acid copolymers, ethylene-methacrylic acid copolymers, ethylene-ethyl acrylate copolymers, ethylene-acrylic acid-ethyl acrylate copolymers, ethylene-vinyl acetate copolymers, ethylene-vinyl acetate-ethyl acetate copolymers, ethylene-glycidyl methacrylate copolymers, ethylene-glycidyl methacrylate-ethyl acrylate copolymers and their metal salts (ionomers). Such carbonyl group-having ethylenic copolymers or their metal salts (ionomers) may be used herein either singly or in combination thereof.

Further, as the polyolefinic resin, also usable is a polymer alloy containing an ethylene component and a propylene component. The constitution (morphology) of the polymer alloy is not particularly limited, and examples thereof include various types of constitutions (morphologies), such as (1) a polymer blend in which at least two polymers are physically mixed (physical mixture), (2) a block copolymer or a graft copolymer in which at least two polymers are bonded by covalent bonding, (3) an interpenetrating polymer network (IPN) structure in which at least two polymers are entangled without being bonded by covalent bonding. The polymer alloy may not always be uniform in point of its constitution (or that is, its constitution may be distributed); or it may have a solution structure of at least two polymers (solution polymer alloy), or may also have a non-solution phase-separated structure of at least two polymers (non-solution polymer alloy). It may have such a thermal characteristic that it has plural exothermic or endothermic peaks in analysis by differential scanning calorimetry (DSC analysis).

Examples of the polymer alloy containing an ethylene component and a propylene component include a mixture(physical mixture) of polypropylene (homopolypropylene or random polypropylene) and polyethylene (including a copolymer of ethylene and a small amount of any other α-olefin), a propylene/ethylene copolymer, and a ternary polymer of propylene, ethylene and any other α-olefin than these (in which examples of the other α-olefin include 1-butene, 1-pentene, 1-hexene, 4-methyl-1-pentene, 1-heptene and 1-octene, and preferably 1-butene). The "homopolypropylene" means a polymer in which the monomer component is substantially propylene alone (100 % propylene) (i.e., propylene homopolymer); and the "random polypropylene" means a polypropylene-type random copolymer in which an ethylene component in an amount of a few % or so relative to the overall monomer component is randomly copolymerized with propylene.

In the case where the polymer alloy is a copolymer (especially block copolymer), the polymer alloy is preferably a copolymer prepared through two-stage or more multi-stage copolymerization, and more preferably it is a propylene/ethylene copolymer. The copolymer through such multi-stage copolymerization may be prepared, for example, by first pre-polymerizing propylene or propylene and any other α-olefin in the first stage of multi-stage polymerization, in the presence of a catalyst containing a titanium compound and an organic aluminium compound, thereby giving a polypropylene (propylene homopolymer) or a propylene-α-olefin copolymer (copolymer of propylene and the other α-olefin), and then copolymerizing propylene and ethylene and optionally any other α-olefin in the second and subsequent stages, in the presence of the resin composition obtained in the first-stage polymerization step, as described in JP-A-4-224809 and JP-A-2001-192629. In the process, the polymer produced in the first-stage prepolymerization step (polypropylene or propylene-α-olefin copolymer), and the polymer produced in the second and subsequent stages (propylene-ethylene copolymer or propylene-ethylene-other α-olefin copolymer) may be blended on a molecular level through polymerization in the second and subsequent stages to give a polymer alloy.

The titanium compound may be, for example, a spherical solid catalyst having a mean particle size of 15 µm, prepared by co-grinding titanium trichloride and magnesium chloride followed by processing them with n-butyl orthotitanate, 2-ethylhexanol, ethyl p-toluate, silicon tetrachloride, diisobutyl phthalate or the like. As the organic aluminium compound, for example, usable is an alkylaluminium compound such as triethylaluminium. To the polymerization phase, if desired, a silicon compound serving as an electron donor, such as diphenyldimethoxysilane, may be added, and an iodine compound such as ethyl iodide may be added.

The polymer alloy containing such an ethylene component and a propylene component preferably has a dynamic storage Young's modulus (E') at 23°C of from 20 MPa to less than 400 MPa (preferably from 200 MPa to less than 400 MPa), has a dynamic storage Young's modulus (E') at 80°C of from 40 MPa to less than 180 MPa (preferably from 45 to 160 MPa), and has a dynamic storage Young's modulus (E') at 120°C of from 12 MPa to less than 70 MPa (preferably from 15 to 65 MPa). According to the dynamic storage Young's modulus (E') falling within the range as above, the substrate may exhibit good flexibility.

The dynamic storage Young's modulus (E') of the polymer alloy may be measured as follows. A test piece of a polymer alloy (thickness: 0.2 mm, width: 10 mm, and length: 20 mm) is prepared, and the dynamic storage Young's modulus profile of the test piece at different temperatures is determined, using a tester, DMS 200 (manufactured by Seiko Instruments). The measurement mode is a tensile mode; the heating rate is 2°C/min; and the frequency condition is 1 Hz.

Examples of the polymer alloy having a dynamic storage Young's modulus (E') as above are Sunallomer's Catalloy (ADFLEX) series (e.g., trade names KS-353P, KS-021P, C200F and Q200F).

Examples of the metal hydroxide in the polyolefin substrate include aluminium hydroxide, magnesium hydroxide, calcium hydroxide, barium hydroxide and zirconium hydroxide. Such metal hydroxides may be used herein either singly or in combination of two or more thereof.

The metal hydroxide may be subjected to surface treatment. Examples of the surface treatment include silane coupling treatment. In the silane coupling treatment, usable is any known or conventional silane coupling agent such as an aminosilane coupling agent. Accordingly, the metal hydroxide for use herein may be one surface-treated with a silane coupling agent.

The proportion of the metal hydroxide is not particularly limited and it may be, for example, from 10 to 200 parts by weight (preferably from 50 to 150 parts by weight) with respect to 100 parts by weight of the polyolefin resin. When the proportion of the metal hydroxide is smaller than 10 parts by weight with respect to 100 parts by weight of the polyolefin resin, then the flame retardancy of the substrate (or the pressure-sensitive adhesive tape) may be lowered. On the other hand, when it is larger than 200 parts by weight, then the flexibility and the stretchability of the substrate (or the pressure-sensitive adhesive tape) may worsen.

The polyolefin resin composition to form the polyolefin substrate may contain, if desired, various additives such as a filler (e.g., inorganic filler such as titanium oxide and zinc oxide), an aging inhibitor (e.g., amine-type aging inhibitor, quinoline-type aging inhibitor, hydroquinone-type aging inhibitor, phenol-type aging inhibitor, phosphorus-type aging inhibitor and phosphite-type aging inhibitor), an antioxidant, a UV absorbent (e.g., salicylic acid derivative, benzophenone-type UV absorbent, benzotriazole-type UV absorbent and hindered amine-type UV absorbent), a lubricant, a plasticizer, a colorant (e.g., pigment and dye), a nucleating agent and a heavy metal inactivator.

The method for producing the polyolefin substrate is not specifically limited. For example, the substrate may be produced by dry-blending a polyolefin resin, a metal hydroxide and optionally various additives such as filler, then kneading the mixture by the use of a Banbury mixer, a roll, an extruder or the like (in this stage, the mixture may be heated, if desired), and thereafter shaping the thus-kneaded mixture into films or sheets according to a known or conventional shaping method (for example, compression molding method, calendering method, injection-molding method or extrusion method). As the method for producing the polyolefin substrate, preferably employed is a calender-rolling method and an extrusion method through a flat die (flat die extrusion method).

The polyolefin substrate has a form of a film or sheet. The thickness of the film or sheet-shaped polyolefin substrate (polyolefin film or sheet) is not particularly limited and may differ depending on the use of the pressure-sensitive adhesive tape, and is generally about from 0.01 to 1 mm (preferably from 0.05 to 5 mm). The polyolefin substrate may have a single-layered structure, or may have a multi-layered structure. If desired, the polyolefin substrate may be subjected to various treatments such as backing treatment, antistatic treatment or underlayer coating treatment.

### Pressure-Sensitive Adhesive Tape

The pressure-sensitive adhesive tape of the invention has a constitution that at least one pressure-sensitive adhesive layer is formed on at least one surface of a substrate, in which the substrate is formed of an olefin resin composition containing a polyolefin resin and a metal hydroxide, and in which the pressure-sensitive adhesive layer is formed of an emulsion-type acrylic adhesive composition containing an acrylic emulsion where the emulsion particles have a mean particle size of 0.2 µm or less, as defined in claim 1. The pressure-sensitive adhesive tape may have a pressure-sensitive adhesive layer of an emulsion-type acrylic adhesive composition only on one surface of the polyolefin substrate, or may have a plurality of pressure-sensitive adhesive layers of an emulsion-type acrylic adhesive composition on both surfaces of the polyolefin substrate.

In the case where the pressure-sensitive adhesive tape has a pressure-sensitive adhesive layer of an emulsion-type acrylic adhesive composition only on one surface of a polyolefin substrate, when the pressure-sensitive adhesive tape of this type comprises, for example, a polyolefin substrate, a pressure-sensitive adhesive layer of an emulsion-type acrylic adhesive composition formed on one surface of the polyolefin substrate, and a backing layer formed on the other surface of the polyolefin substrate, then it may be rolled up with its adhesive layer being kept on the back side of the sheet (the backing layer side of the sheet), whereby the pressure-sensitive adhesive tape may be produced as an adhesive roll tape. In this case, the pressure-sensitive adhesive layer is protected by the backing layer formed on the back side of the sheet.

Of course, in the other embodiments of a double-adhesive tape or a pressure-sensitive adhesive tape of which the back is not a lubricant face, the pressure-sensitive adhesive layer may be protected with a release liner (separator) and the tape may be rolled up to be an adhesive roll tape.

The pressure-sensitive adhesive tape may have any other optional layer (e.g., interlayer or undercoat layer), so long as the effect of the present invention is not impaired.

The pressure-sensitive adhesive layer may have a single-layered structure or a laminate structure. The thickness of the pressure-sensitive adhesive layer (dry thickness) may be, for example, from 10 to 50 µm (preferably from 15 to 40 µm).

The pressure-sensitive adhesive layer may be formed by a known or conventional process. For example, it may be formed according to a casting method, a roll coater method, a reverse coater method or a doctor blade method.

As mentioned hereinabove, the pressure-sensitive adhesive tape of the invention has excellent adhesiveness and edge-peeling resistance, and may exhibit a suitable rewinding power. Accordingly, in its use, the pressure-sensitive adhesive tape of the invention may be rewound at a suitable rewinding power, and after stuck, it may exhibit excellent edge-peeling resistance, thereby keeping a good adhering condition for a long period of time.

As the substrate thereof, the pressure-sensitive adhesive tape has a polyolefin substrate not substantially containing a halogen atom, and therefore, when it is incinerated after use, it does not generate a toxic gas. Accordingly, the pressure-sensitive adhesive tape of the invention has good heat resistance, and does not generate a toxic gas when incinerated.

Accordingly, the pressure-sensitive adhesive tape of the invention is favorably used as a pressure-sensitive adhesive tape for bundling, especially favorably as a bundling pressure-sensitive adhesive tape for use in the site that requires electric insulation (in particular, bundling pressure-sensitive adhesive tape for wires). The wires may be any of various electric wires or cables, and above all, the pressure-sensitive adhesive tape is especially favorably used for wires for electric appliances and wires for automobiles (even more favorably for wires for automobiles).

### Examples

The invention is described in more detail with reference to the following Examples.

### Preparation Example 1 for emulsion-type acrylic polymer

0.03 parts by weight of a water-soluble azo-type initiator (Wako Pure Chemical Industries' trade name, V-50) serving as a polymerization initiator was added to 100 parts by weight of a mixture comprising 70% by weight of n-butyl acrylate, 29.5% by weight of 2-ethylhexyl acrylate and 0.5% by weight of methacrylic acid, and these were emulsified with 2 parts by weight of a reactive emulsifier (Daiichi Kogyo Seiyaku's trade name, Aqualon BC-2020), and then polymerized at about 60°C for 2 hours through emulsion polymerization in a mode of lump polymerization to give an emulsion of an acrylic polymer (this may be referred to as "acrylic emulsion polymer A"). In this acrylic emulsion polymer A, the emulsion particles had a mean particle size of 0.128 µm.

### Preparation Example 2 for emulsion-type acrylic polymer

0.1 parts by weight of a water-soluble azo-type initiator (Wako Pure Chemical Industries' trade name, V-50) serving as a polymerization initiator was added to 100 parts by weight of a mixture comprising 70% by weight of n-butyl acrylate, 28.75% by weight of 2-ethylhexyl acrylate and 1.25% by weight of methacrylic acid, and these were emulsified with 2 parts by weight of a reactive emulsifier (Daiichi Kogyo Seiyaku's trade name, Aqualon BC-2020), and then polymerized at about 60°C for 2 hours through emulsion polymerization in a mode of continuous dropwise addition polymerization to give an emulsion of an acrylic polymer (this may be referred to as "acrylic emulsion polymer B"). In this acrylic emulsion polymer B, the emulsion particles had a mean particle size of 0.141 µm. To the aqueous system (aqueous phase) to which the monomer component-containing emulsion is dropwise added, previously given was from 0.05 to 1 part by weight (preferably from 0.1 to 0.5 parts by weight) of the emulsifier relative to 100 parts by weight of the mixture comprising n-butyl acrylate, 2-ethylhexyl acrylate and methacrylic acid, and the speed at which the emulsion is dropwise added to the system was suitably controlled whereby the acrylic polymer emulsion was obtained in which the emulsion particles have a mean particle size of 0.141 µm.

### Preparation Example 3 for emulsion-type acrylic polymer

0.005 parts by weight of a silane coupling agent (Shin-etsu Silicone's trade name, KBM-503), and 0.1 parts by weight of a water-soluble azo-type initiator (Wako Pure Chemical Industries' trade name, V-50) serving as a polymerization initiator were added to 100 parts by weight of a mixture comprising 70% by weight of n-butyl acrylate, 28.75% by weight of 2-ethylhexyl acrylate and 1.25% by weight of methacrylic acid, and these were emulsified with 2 parts by weight of a reactive emulsifier (Daiichi Kogyo Seiyaku's trade name, Aqualon BC-2020), and then polymerized at about 60°C for 2 hours to give an emulsion of an acrylic polymer (this may be referred to as "acrylic emulsion polymer C"). In this acrylic emulsion polymer C, the emulsion particles had a mean particle size of 0.158 µm. To the aqueous system (aqueous phase) to which the monomer component-containing emulsion is dropwise added, previously given was from 0.05 to 1 part by weight (preferably from 0.1 to 0.5 parts by weight) of the emulsifier relative to 100 parts by weight of the mixture comprising n-butyl acrylate, 2-ethylhexyl acrylate and methacrylic acid, and the speed at which the emulsion is dropwise added to the system was suitably controlled whereby the acrylic polymer emulsion was obtained in which the emulsion particles have a mean particle size of 0.158 µm.

### Preparation Example 4 for emulsion-type acrylic polymer

0.1 parts by weight of a water-soluble azo-type initiator (Wako Pure Chemical Industries' trade name, V-50) serving as a polymerization initiator was added to 100 parts by weight of a mixture comprising 70% by weight of n-butyl acrylate, 29.5% by weight of 2-ethylhexyl acrylate and 0.5% by weight of methacrylic acid, and these were emulsified with 2 parts by weight of a reactive emulsifier (Daiichi Kogyo Seiyaku's trade name, Aqualon BC-2020), and then polymerized at about 60°C for 2 hours through emulsion polymerization in a mode of continuous dropwise addition polymerization to give an emulsion of an acrylic polymer (this may be referred to as "acrylic emulsion polymer D"). In this acrylic emulsion polymer D, the emulsion particles had a mean particle size of 0.180 µm. To the aqueous system (aqueous phase) to which the monomer component-containing emulsion is dropwise added, previously given was from 0.05 to 1 part by weight (preferably from 0.1 to 0.5 parts by weight) of the emulsifier relative to 100 parts by weight of the mixture comprising n-butyl acrylate, 2-ethylhexyl acrylate and methacrylic acid, and the speed at which the emulsion is dropwise added to the system was suitably controlled whereby the acrylic polymer emulsion was obtained in which the emulsion particles have a mean particle size of 0.180 µm**.**

### Preparation Example 5 for emulsion-type acrylic polymer

0.1 parts by weight of a water-soluble azo-type initiator (Wako Pure Chemical Industries' trade name, V-50) serving as a polymerization initiator was added to 100 parts by weight of a mixture comprising 70% by weight of n-butyl acrylate, 29.5% by weight of 2-ethylhexyl acrylate and 0.5% by weight of methacrylic acid, and these were emulsified with 2 parts by weight of a reactive emulsifier (Daiichi Kogyo Seiyaku's trade name, Aqualon BC-2020), and then polymerized at about 60°C for 2 hours through emulsion polymerization in a mode of continuous dropwise addition polymerization to give an emulsion of an acrylic polymer (this may be referred to as "acrylic emulsion polymer E"). In this acrylic emulsion polymer E, the emulsion particles had a mean particle size of 0.216 µm. To the aqueous system (aqueous phase) to which the monomer component-containing emulsion is dropwise added, previously given was the emulsifier in an amount of less than 0.05 parts by weight or more than 1 part by weight relative to 100 parts by weight of the mixture comprising n-butyl acrylate, 2-ethylhexyl acrylate and methacrylic acid, and the speed at which the emulsion is dropwise added to the system was suitably controlled whereby the acrylic polymer emulsion was obtained in which the emulsion particles have a mean particle size of 0.216 µm.

### Preparation Example 6 for emulsion-type acrylic polymer

0.1 parts by weight of a water-soluble azo-type initiator (Wako Pure Chemical Industries' trade name, V-50) serving as a polymerization initiator was added to 100 parts by weight of a mixture comprising 70% by weight of n-butyl acrylate, 29.5% by weight of 2-ethylhexyl acrylate and 0.5% by weight of methacrylic acid, and these were emulsified with 2 parts by weight of a reactive emulsifier (Daiichi Kogyo Seiyaku's trade name, Aqualon BC-2020), and then polymerized at about 60°C for 2 hours through emulsion polymerization in a mode of continuous dropwise addition polymerization to give an emulsion of an acrylic polymer (this may be referred to as "acrylic emulsion polymer F"). In this acrylic emulsion polymer F, the emulsion particles had a mean particle size of 0.489 µm. To the aqueous system (aqueous phase) to which the monomer component-containing emulsion is dropwise added, previously given was the emulsifier in an amount of less than 0.05 parts by weight or more than 1 part by weight relative to 100 parts by weight of the mixture comprising n-butyl acrylate, 2-ethylhexyl acrylate and methacrylic acid, and the speed at which the emulsion is dropwise added to the system was suitably controlled whereby the acrylic polymer emulsion was obtained in which the emulsion particles have a mean particle size of 0.489 µm.

### Preparation Example 7 for emulsion-type acrylic polymer

0.1 parts by weight of a water-soluble azo-type initiator (Wako Pure Chemical Industries' trade name, V-50) serving as a polymerization initiator was added to 100 parts by weight of a mixture comprising 70% by weight of n-butyl acrylate, 29.5% by weight of 2-ethylhexyl acrylate and 0.5% by weight of methacrylic acid, and these were emulsified with 2 parts by weight of a reactive emulsifier (Daiichi Kogyo Seiyaku's trade name, Aqualon BC-2020), and then polymerized at about 60°C for 2 hours through emulsion polymerization in a mode of continuous dropwise addition polymerization to give an emulsion of an acrylic polymer (this may be referred to as "acrylic emulsion polymer G"). In this acrylic emulsion polymer G, the emulsion particles had a mean particle size of 0.626 µm To the aqueous system (aqueous phase) to which the monomer component-containing emulsion is dropwise added, previously given was the emulsifier in an amount of less than 0.05 parts by weight or more than 1 part by weight relative to 100 parts by weight of the mixture comprising n-butyl acrylate, 2-ethylhexyl acrylate and methacrylic acid, and the speed at which the emulsion is dropwise added to the system was suitably controlled whereby the acrylic polymer emulsion was obtained in which the emulsion particles have a mean particle size of 0.626 µm.

### Preparation Example 8 for emulsion-type acrylic polymer

0.1 parts by weight of a water-soluble azo-type initiator (Wako Pure Chemical Industries' trade name, V-50) serving as a polymerization initiator was added to 100 parts by weight of a mixture comprising 70% by weight of n-butyl acrylate, 29.5% by weight of 2-ethylhexyl acrylate and 0.5% by weight of methacrylic acid, and these were emulsified with 2 parts by weight of a reactive emulsifier (Daiichi Kogyo Seiyaku's trade name, Aqualon BC-2020), and then polymerized at 60°C for 2 hours through emulsion polymerization in a mode of continuous dropwise addition polymerization to give an emulsion of an acrylic polymer (this may be referred to as "acrylic emulsion polymer H"). In this acrylic emulsion polymer H, the emulsion particles had a mean particle size of 0.948 µm. To the aqueous system (aqueous phase) to which the monomer component-containing emulsion is dropwise added, previously given was the emulsifier in an amount of less than 0.05 parts by weight or more than 1 part by weight relative to 100 parts by weight of the mixture comprising n-butyl acrylate, 2-ethylhexyl acrylate and methacrylic acid, and the speed at which the emulsion is dropwise added to the system was suitably controlled whereby the acrylic polymer emulsion was obtained in which the emulsion particles have a mean particle size of 0.948 µm.

### Example 1

As in Table 1, 5 parts by weight of a petroleum resin AP-1085 (Arakawa Chemical's trade name), 25 parts by weight of a rosin resin E-865 (rosin ester resin, Arakawa Chemical's trade name), and 0.03 parts by weight of a crosslinking agent Tetrad C (epoxy-type crosslinking agent, Mitsubishi Gas Chemical's trade name) were added to 100 parts by weight (solid content) of the acrylic emulsion polymer A, and mixed in a homomixer at room temperature (20 to 25°C) for 10 minutes at a revolution speed of 1,000 to 2,000 rpm, thereby preparing an emulsion-type acrylic adhesive composition.

The emulsion-type acrylic adhesive composition was applied onto one surface of the polyolefin substrate mentioned below in such a manner that its dry thickness could be 30 µm, and then dried and cured to form a pressure-sensitive adhesive layer thereon. Then, this was wound up in such a manner that the pressure-sensitive adhesive layer could face the back (own back surface) of the polyolefin substrate to produce a pressure-sensitive adhesive tape.

### Polyolefin Substrate:

| | |
|---|---|
| Ethylene-vinyl acetate copolymer (EVA) [m.p.: 84°C, Mitsui DuPont Chemical's trade name Evaflex P-1905] | |
| | 20 parts by weight |
| Polymer alloy containing ethylene component and propylene component [Montel SDK Sunrise's trade name, Catalloy KS-353P] | |
| | 80 parts by weight |
| Magnesium hydroxide [Mg(OH)₂] Kyowa Chemical Industry's Kisuma 5NH] [processed with silane coupling agent, | |
| | 170 parts by weight |
| Carbon black [Tokai Carbon's trade name, Seast 3H] | |
| | 4 parts by weight |

The above materials (ethylene-vinyl acetate copolymer, polymer alloy, magnesium hydroxide, carbon black) were dry-blended, then kneaded in a 3-liter pressure kneader at 180°C and pelletized. Using a calender roller, the pelletized composition was shaped into a film having a thickness of 0.2 mm, thereby producing a tape substrate. One surface of the tape substrate was subjected to corona discharge treatment, and this is the polyolefin substrate used herein.

### Example 2

As in Table 1, 15 parts by weight of a petroleum resin AP-1085 (Arakawa Chemical's trade name), 15 parts by weight of a rosin resin E-865 (rosin ester resin, Arakawa Chemical's trade name), and 0.01 parts by weight of a crosslinking agent Tetrad C (epoxy-type crosslinking agent, Mitsubishi Gas Chemical's trade name) were added to 100 parts by weight (solid content) of the acrylic emulsion polymer B, and mixed in a homomixer at room temperature (20 to 25°C) for about 10 minutes at a revolution speed of 1,000 to 2,000 rpm, thereby preparing an emulsion-type acrylic adhesive composition.

The emulsion-type acrylic adhesive composition was applied onto one surface of the same polyolefin substrate as in Example 1 in such a manner that its dry thickness could be 30 µm, and then dried and cured to form a pressure-sensitive adhesive layer thereon. Then, this was wound up in such a manner that the pressure-sensitive adhesive layer could face the back (own back surface) of the polyolefin substrate to produce a pressure-sensitive adhesive tape.

### Example 3

As in Table 1, 15 parts by weight of a petroleum resin AP-1085 (Arakawa Chemical's trade name) and 15 parts by weight of a rosin resin E-865 (rosin ester resin, Arakawa Chemical's trade name) were added to 100 parts by weight (solid content) of the acrylic emulsion polymer C, and mixed in a homomixer at room temperature (20 to 25°C) for about 10 minutes at a revolution speed of 1,000 to 2,000 rpm, thereby preparing an emulsion-type acrylic adhesive composition.

The emulsion-type acrylic adhesive composition was applied onto one surface of the same polyolefin substrate as in Example 1 in such a manner that its dry thickness could be 30 µm, and then dried and cured to form a pressure-sensitive adhesive layer thereon. Then, this was wound up in such a manner that the pressure-sensitive adhesive layer could face the back (own back surface) of the polyolefin substrate to produce a pressure-sensitive adhesive tape.

### Example 4

As in Table 1, 15 parts by weight of a petroleum resin AP-1085 (Arakawa Chemical's trade name), 15 parts by weight of a rosin resin E-865 (rosin ester resin, Arakawa Chemical's trade name), and 0.01 parts by weight of a crosslinking agent Tetrad C (epoxy-type crosslinking agent, Mitsubishi Gas Chemical's trade name) were added to 100 parts by weight (solid content) of the acrylic emulsion polymer D, and mixed in a homomixer at room temperature (20 to 25°C) for about 10 minutes at a revolution speed of 1,000 to 2,000 rpm, thereby preparing an emulsion-type acrylic adhesive composition.

The emulsion-type acrylic adhesive composition was applied onto one surface of the same polyolefin substrate as in Example 1 in such a manner that its dry thickness could be 30 µm, and then dried and cured to form a pressure-sensitive adhesive layer thereon. Then, this was wound up in such a manner that the pressure-sensitive adhesive layer could face the back (own back surface) of the polyolefin substrate to produce a pressure-sensitive adhesive tape.

### Comparative Example 1

As in Table 1, 5 parts by weight of a petroleum resin AP-1085 (Arakawa Chemical's trade name), 25 parts by weight of a rosin resin E-865 (rosin ester resin, Arakawa Chemical's trade name), and 0.03 parts by weight of a crosslinking agent Tetrad C (epoxy-type crosslinking agent, Mitsubishi Gas Chemical's trade name) were added to 100 parts by weight (solid content) of the acrylic emulsion polymer E, and mixed in a homomixer at room temperature (20 to 25°C) for about 10 minutes at a revolution speed of 1,000 to 2,000 rpm, thereby preparing an emulsion-type acrylic adhesive composition.

The emulsion-type acrylic adhesive composition was applied onto one surface of the same polyolefin substrate as in Example 1 in such a manner that its dry thickness could be 30 µm, and then dried and cured to form a pressure-sensitive adhesive layer thereon. Then, this was wound up in such a manner that the pressure-sensitive adhesive layer could face the back (own back surface) of the polyolefin substrate to produce a pressure-sensitive adhesive tape.

### Comparative Example 2

As in Table 1, 5 parts by weight of a petroleum resin AP-1085 (Arakawa Chemical's trade name), 25 parts by weight of a rosin resin E-865 (rosin ester resin, Arakawa Chemical's trade name), and 0.03 parts by weight of a crosslinking agent Tetrad C (epoxy-type crosslinking agent, Mitsubishi Gas Chemical's trade name) were added to 100 parts by weight (solid content) of the acrylic emulsion polymer F, and mixed in a homomixer at room temperature (20 to 25°C) for about 10 minutes at a revolution speed of 1,000 to 2,000 rpm, thereby preparing an emulsion-type acrylic adhesive composition.

The emulsion-type acrylic adhesive composition was applied onto one surface of the same polyolefin substrate as in Example 1 in such a manner that its dry thickness could be 30 µm, and then dried and cured to form a pressure-sensitive adhesive layer thereon. Then, this was wound up in such a manner that the pressure-sensitive adhesive layer could face the back (own back surface) of the polyolefin substrate to produce a pressure-sensitive adhesive tape.

### Comparative Example 3

As in Table 1, 5 parts by weight of a petroleum resin AP-1085 (Arakawa Chemical's trade name), 25 parts by weight of a rosin resin E-865 (rosin ester resin, Arakawa Chemical's trade name), and 0.03 parts by weight of a crosslinking agent Tetrad C (epoxy-type crosslinking agent, Mitsubishi Gas Chemical's trade name) were added to 100 parts by weight (solid content) of the acrylic emulsion polymer G, and mixed in a homomixer at room temperature (20 to 25°C) for about 10 minutes at a revolution speed of 1,000 to 2,000 rpm, thereby preparing an emulsion-type acrylic adhesive composition.

The emulsion-type acrylic adhesive composition was applied onto one surface of the same polyolefin substrate as in Example 1 in such a manner that its dry thickness could be 30 µm, and then dried and cured to form a pressure-sensitive adhesive layer thereon. Then, this was wound up in such a manner that the pressure-sensitive adhesive layer could face the back (own back surface) of the polyolefin substrate to produce a pressure-sensitive adhesive tape.

### Comparative Example 4

As in Table 1, 5 parts by weight of a petroleum resin AP-1085 (Arakawa Chemical's trade name), 25 parts by weight of a rosin resin E-865 (rosin ester resin, Arakawa Chemical's trade name), and 0.03 parts by weight of a crosslinking agent Tetrad C (epoxy-type crosslinking agent, Mitsubishi Gas Chemical's trade name) were added to 100 parts by weight (solid content) of the acrylic emulsion polymer H, and mixed in a homomixer at room temperature (20 to 25°C) for about 10 minutes at a revolution speed of 1,000 to 2,000 rpm, thereby preparing an emulsion-type acrylic adhesive composition.

The emulsion-type acrylic adhesive composition was applied onto one surface of the same polyolefin substrate as in Example 1 in such a manner that its dry thickness could be 30 µm, and then dried and cured to form a pressure-sensitive adhesive layer thereon. Then, this was wound up in such a manner that the pressure-sensitive adhesive layer could face the back (own back surface) of the polyolefin substrate to produce a pressure-sensitive adhesive tape.

### Evaluation

The pressure-sensitive adhesive tapes obtained in Examples 1 to 4 and Comparative Examples 1 to 4 were evaluated for their adhesion strength, edge-peeling resistance and rewinding power, according to the measurement methods and the evaluation method mentioned below.

### Method for measurement of adhesion strength

Each of the pressure-sensitive adhesive tapes of Examples 1 to 4 and Comparative Examples 1 to 4 was cut into a size of 19 mm width and 100 mm length, and the pressure-sensitive adhesive tape sample of 19 mm x 100 mm in size was stuck under pressure to the object mentioned below by applying a 2-kg roller thereto in a mode of coming and going once thereon. Then, this was left under the condition mentioned below, and tried according to 180°-peeling test (peeling angle: 180° ; pulling speed : 300 mm/min; 23°C, 50%RH) to measure the power needed for peeling the tape (180° peeling force, N/19 mm), thereby evaluating the adhesion strength of the tape. The measurement results of the samples are shown in the column of "adhesion strength to SUS plate (N/19 mm)" and "adhesion strength to own back surface (N/19 mm)" in Table 1.
Object: stainless plate (SUS plate), own back surface (polyolefin substrate surface). Leaving condition: 23°C x 20 minutes.

### Method for evaluation of edge-peeling resistance

A pressure-sensitive adhesive tape sample having a width of 6.4 mm was wound around a metal rod having a diameter of 3.2 mm, according to "ASTM edge-peeling test". After one week (after 7 days), the edge-peeling distance (mm) was measured. The evaluation results are shown in the column of "edge-peeling resistance (mm)" in Table 1. The samples having a shorter edge-peeling distance have better edge-peeling resistance.

### Method for measurement of rewinding power

Using a pressure-sensitive adhesive tape rewinding tester (Imada Seisakusho's Rewinding Tester), a 19-mm wide adhesive tape sample was rewound at room temperature (23°C) and at a pulling speed of 30 mm/min, whereupon the tension (rewinding power, N/19 mm) of the sample was measured. The measurement results are shown in the column of "rewinding power (N/19 mm)" in Table 1.

**Table 1**

| | | Example | | | | Comparative Example | | | |
|---|---|---|---|---|---|---|---|---|---|
| | | 1 | 2 | 3 | 4 | 1 | 2 | 3 | 4 |
| **Composition** | | | | | | | | | |
| Adhesive Composition (weight part) | | | | | | | | | |
| | Acrylic emulsion polymer A | 100 | | | | | | | |
| | Acrylic emulsion polymer B | | 100 | | | | | | |
| | Acrylic emulsion polymer C | | | 100 | | | | | |
| | Acrylic emulsion polymer D | | | | 100 | | | | |
| | Acrylic emulsion polymer E | | | | | 100 | | | |
| | Acrylic emulsion polymer F | | | | | | 100 | | |
| | Acrylic emulsion polymer G | | | | | | | 100 | |
| | Acrylic emulsion polymer H | | | | | | | | 100 |
| Petroleum Resin (weight part) | | 5 | 15 | 15 | 15 | 5 | 5 | 5 | 5 |
| Rosin Resin (weight part) | | 25 | 15 | 15 | 15 | 25 | 25 | 25 | 25 |
| Crosslinking Agent (weight part) | | 0.03 | 0.01 | - | 0.01 | 0.03 | 0.03 | 0.03 | 0.03 |
| **Evaluation Results** | | | | | | | | | |
| | Initial Adhesion strength | | | | | | | | |
| | Adhesion strength to SUS plate (N/19 mm) | 4.30 | 3.32 | 3.79 | 4.17 | 5.05 | 4.42 | 4.40 | 5.18 |
| | Adhesion strength to own back surface (N/19mm) | 3.40 | 3.65 | 3.57 | 5.69 | 5.94 | 3.15 | 3.60 | 3.02 |
| Edge-Peeling Resistance (mm) | | 0.0 | 0.0 | 0.2 | 0.5 | 4.5 | 81 | 116 | 163 |
| Rewinding Power (N/19 mm) | | - | 10.1 | 10.4 | - | - | - | - | - |

As is obvious from Table 1, it was confirmed that the pressure-sensitive adhesive tapes of Examples 1 to 4 all had well-balanced edge-peeling resistance and rewinding power and had good adhesiveness.

Comparing with pressure-sensitive adhesive tape of Example 1 with the pressure-sensitive adhesive tapes of Comparative Examples 1 to 3, it was confirmed that, when the mean particle size of the emulsion particles in the acrylic polymer emulsion (emulsion-type acrylic polymer) is smaller, then the edge-peeling resistance of the tape is better.

The substrate of the pressure-sensitive adhesive tape of Examples is formed of an olefinic resin and does not contain a halogen atom; and therefore, it does not generate a harmful gas when incinerated. In addition, it contains a metal hydroxide, and its heat resistance is therefore good. Accordingly, the pressure-sensitive adhesive tapes of Examples of the invention can be favorably used as pressure-sensitive adhesive tapes for bundling wires, and they are especially useful as pressure-sensitive adhesive tapes for bundling automobile wires that require heat resistance.

## Claims

1. A pressure-sensitive adhesive tape comprising a substrate and at least one pressure-sensitive adhesive layer disposed on at least one surface of the substrate,
wherein the substrate comprises an olefinic resin composition containing a polyolefin resin and a metal hydroxide, and
wherein the pressure-sensitive adhesive layer is formed of an emulsion-type acrylic adhesive composition containing an acrylic emulsion in which emulsion particles have a mean particle size of 0.2 µm or less as determined with a laser scattering diffractometric particle sizer "LS 13 320" manufactured by Beckmann Coulter;
, wherein the emulsion-type acrylic adhesive composition contains the following components (A), (B) and (C):
(A) emulsion-type acrylic polymer,
(B) petroleum resin, and
(C) rosin resin,
wherein the component (B) is contained in a proportion of from 1 to 50 parts by weight with respect to 100 parts by weight of the component (A), and the component (C) is contained in a proportion of from 1 to 50 parts by weight with respect to 100 parts by weight of the component (A); and wherein the emulsion-type acrylic polymer (A) is an emulsion-type acrylic polymer which is obtainable through an emulsion polymerization of monomer components in the presence of a reactive emulsifier having a group copolymerizable with the (meth)acrylate.

2. The pressure-sensitive adhesive tape according to claim 1, wherein the emulsion-type acrylic polymer (A) is an acrylic polymer which is obtainable through a copolymerization of a monomer mixture containing a (meth)acrylate and an ethylenic unsaturated monomer having a hydrolyzing silicon atom-containing group.

3. The pressure-sensitive adhesive tape according to claim 1, wherein a total proportion of the component (B) and the component (C) is from 10 to 60 parts by weight with respect to 100 parts by weight of the component (A).

## Patentansprüche

1. Haftklebeband, umfassend ein Substrat und wenigstens eine Haftkleberschicht, die auf wenigstens einer Oberfläche des Substrats angeordnet ist,
wobei das Substrat eine olefinische Harzzusammensetzung umfasst, die ein Polyolefinharz und ein Metallhydroxid enthält, und
wobei die Haftkleberschicht aus einer Acrylkleberzusammensetzung vom Emulsionstyp gebildet ist, die eine Acrylemulsion enthält, in welcher Emulsionsteilchen eine mittlere Teilchengröße von 0,2 µm oder weniger, bestimmt mit einem diffraktometrischen Teilchengrößenbestimmungsgerät mit Laserstreuung "LS 13 320", hergestellt von Beckmann Coulter, aufweisen,
wobei die Acrylkleberzusammensetzung vom Emulsionstyp die folgenden Komponenten (A), (B) und (C) enthält:
(A) ein Acrylpolymer vom Emulsionstyp,
(B) ein Erdölharz, und
(C) ein Kolophoniumharz,
wobei die Komponente (B) in einem Anteil von 1 bis 50 Gewichtsteilen, bezogen auf 100 Gewichtsteile der Komponente (A), enthalten ist und die Komponente (C) in einem Anteil von 1 bis 50 Gewichtsteilen, bezogen auf 100 Gewichtsteile der Komponente (A), enthalten ist;
und wobei das Acrylpolymer vom Emulsionstyp (A) ein Acrylpolymer vom Emulsionstyp ist, welches erhältlich ist durch eine Emulsionspolymerisation von Monomerkomponenten in Gegenwart eines reaktionsfähigen Emulgators mit einer Gruppe, die mit dem (Meth)acrylat copolymerisierbar ist.

2. Haftklebeband nach Anspruch 1, wobei das Acrylpolymer vom Emulsionstyp (A) ein Acrylpolymer ist, welches erhältlich ist durch eine Copolymerisation von einer Monomermischung, die ein (Meth)acrylat und ein ethylenisch ungesättigtes Monomer mit einer hydrolysierenden siliciumatomhaltigen Gruppe enthält.

3. Haftklebeband nach Anspruch 1, wobei ein Gesamtanteil der Komponente (B) und der Komponente (C) 10 bis 60 Gewichtsteile, bezogen auf 100 Gewichtsteile der Komponente (A), beträgt.

## Revendications

1. Bande adhésive sensible à la pression comprenant un substrat et au moins une couche adhésive sensible à la pression disposée sur au moins une surface du substrat,
dans laquelle le substrat comprend une composition de résine oléfinique contenant une résine de polyoléfine et un hydroxyde de métal, et
dans laquelle la couche adhésive sensible à la pression est constituée d'une composition adhésive acrylique de type émulsion contenant une émulsion acrylique dans laquelle les particules de l'émulsion présentent une taille moyenne de particules de 0,2 µm ou inférieure déterminée avec un dispositif de mesure de taille de particule diffractométrique à dispersion laser "LS 13 320" fabriqué par Beckmann Coulter,
dans laquelle la composition adhésive acrylique de type émulsion contient les constituants (A), (B) et (C) suivants :
(A) un polymère acrylique de type émulsion,
(B) une résine de pétrole, et
(C) une résine de colophane,
dans laquelle le constituant (B) est contenu dans une proportion de 1 à 50 parties en masse par rapport à 100 parties en masse du constituant (A), et le constituant (C) est contenu dans une proportion de 1 à 50 parties en masse par rapport à 100 parties en masse du constituant (A) ; et dans laquelle le polymère acrylique de type émulsion (A) est un polymère acrylique de type émulsion qui peut être obtenu par une polymérisation en émulsion de constituants monomères en présence d'un émulsionnant réactif présentant un groupe copolymérisable avec le (méth)acrylate.

2. Bande adhésive sensible à la pression selon la revendication 1, dans laquelle le polymère acrylique de type émulsion (A) est un polymère acrylique qui peut être obtenu par une copolymérisation d'un mélange de monomères contenant un (méth)acrylate et un monomère éthylénique insaturé présentant un groupe hydrolysant contenant un atome de silicium.

3. Bande adhésive sensible à la pression selon la revendication 1, dans laquelle une proportion totale du constituant (B) et du constituant (C) est de 10 à 60 parties en masse par rapport à 100 parties en masse du constituant (A).
